# EUROPÄISCHE PATENTSCHRIFT

(11) **EP 3 050 859 B1**
(45) Veröffentlichungstag und Bekanntmachung des Hinweises auf die Patenterteilung: **11.09.2019**
(21) Anmeldenummer: 15153099.5
(22) Anmeldetag: 29.01.2015
(51) Int. Cl.: C04B 28/02, C04B 40/00, C04B 111/00, B28C 5/02

(54) **Verfahren zum Aufspritzen einer faserhaltigen Baustoffmischung im Nassspritzverfahren**
Method for spraying a fibrous building material mixture in a wet spraying process
Procédé de projection d'un mélange de matériaux de construction fibreux dans un procédé de projection par voie humide

(43) Veröffentlichungstag der Anmeldung: 03.08.2016
(73) Patentinhaber: MC-Bauchemie Müller GmbH & Co. KG Chemische Fabriken, 46238 Bottrop (DE); Ruhr-Universität Bochum, 44801 Bochum (DE)
(72) Erfinder: Kleen, Eugen, 45614 Schermbeck (DE); Vollmann, Götz, 44139 Dortmund (DE); Thewes, Markus, 41470 Neus (DE)
(74) Vertreter: Zenz Patentanwälte Partnerschaft mbB

(56) Entgegenhaltungen:
- DE-B3-102009 008 451
- GB-A- 2 347 414
- JP-A- 2002 193 653
- JP-A- 2002 265 249
- JP-A- 2006 290 654
- JP-A- 2007 223 870
- JP-A- 2008 297 182
- US-A- 4 441 944

## Beschreibung

Die Erfindung betrifft ein Verfahren zum Aufspritzen einer hoch faserhaltigen Baustoffmischung im Nassspritzverfahren, wobei eine faserhaltige Baustoffmischung durch eine Förderleitung zu einer Spritzauftragsvorrichtung transportiert wird.

Verfahren zum Aufspritzen einer Baustoffmischung, insbesondere zum Aufspritzen von Beton oder Zementmörtel (Spritzbeton bzw. Spritzmörtel), sind beispielsweise bekannt aus Bernhard Maidl, "Handbuch für Spritzbeton", Ernst & Sohn - Verlag für Architektur und technische Wissenschaften, Berlin, 1992, der allgemein Spritzverfahren, dabei verwendete Geräte und Spritzbeton- und -mörtelmischungen beschreibt. Die Zugabe von Stahlfasern zur Herstellung von Stahlfaserspritzbeton ist dort lediglich am Rande behandelt (vgl. Abschnitt 4.2.4.2 "Stahlfaserdosiergeräte", Seite 95). Die Herstellung von Stahlfaserspritzbeton ist in der Schrift von Harald Schorn, Richard Sonnenberg und Peter Maurer, "Spritzbeton", Schriftenreihe Spezialbetone, Band 6, Verlag Bau + Technik, 2005, beschrieben. Mit den Eigenschaften von Faserbeton im Vergleich zu Stahlbeton befasst sich der Artikel von Gerd Fritsche und Andreas Saxer, "Faser- contra Stahlbeton", in "Österreichisches Betonstahl Magazin" Nr. 93, 2/07, Seiten 6-12.

Bei dem Verfahren zum Aufspritzen einer faserhaltigen Baustoffmischung im Nassspritzverfahren, insbesondere zum Aufspritzen faserbewehrten Betons oder Mörtels, wird üblicherweise zunächst eine Beton- oder Mörtelmischung aus den üblichen Bestandteilen Bindemittel (Zement, latent-hydraulische Bindemittel und/oder Puzzolane), Zuschläge, d.h. Gesteinskörnungen, und Wasser hergestellt. Der Mischung werden dann Fasern zugemischt, wobei hier insbesondere Stahlfasern mit einer Länge von mehreren Zentimetern (z.B. 5 - 6 cm) und einem Durchmesser von etwas weniger als einem Millimeter und/oder kleinere Kunststofffasern übliche Fasern sind. Diese nasse Baustoffmischung wird dann durch eine Förderleitung zu einer Spritzauftragsvorrichtung transportiert. Bei einer Dünnstromförderung wird die Baustoffmischung in einem Druckluftstrom in der Förderleitung gefördert, wohingegen bei einer Dichtstromförderung die Baustoffmischung durch die Förderleitung gepumpt wird. Am Ende der Förderleitung befindet sich eine Spritzdüse. Kurz vor oder beim Verlassen der Förderleitung durch die Spritzdüse hindurch kann der Baustoffmischung noch ein Abbindebeschleuniger zugegeben werden. Die Baustoffmischung wird nach dem Verlassen der Spritzdüse gegen die Auftragsfläche geschleudert, wobei sich der Baustoff verdichtet. Dabei muss er eine Anfangsfestigkeit erlangen, so dass ein Ablösen vom Untergrund vermieden wird, wobei dies durch den Abbindebeschleuniger unterstützt wird.

Die Zugabe der Fasern, insbesondere von Stahlfasern in der Länge mehrerer Zentimeter, verschlechtert die Transportfähigkeit der Baustoffmischung durch die Förderleitung hindurch. Insbesondere bei hohen Faseranteilen nimmt die Neigung der Fasern zum Zusammenballen (sogenannte Igelbildung) zu. Dadurch kann es zum Verstopfen der Förderleitungen kommen (vgl. beispielsweise das Skript von K.-Ch. Thienel und A. Kustermann, "Sonderbetone - Faserbeton", Universität der Bundeswehr München, Institut für Werkstoffe des Bauwesens, Frühlingstrimester 2010, Abschnitt 3.2.2 "Fasergehalt"). Der maximale Fasergehalt hängt unter anderem davon ab, wie feinkörnig die Mischung ist. In feinkörnigen Mischungen (zum Beispiel Mörtel) lassen sich mehr Fasern einmischen als in grobkörnige Betonmischungen. Als maximaler Faseranteil wird beispielsweise bei Stahlfasern von 6 cm Länge und 0,8 mm Durchmesser in pumpbaren Betonmischungen mit einer Korngröße von bis zu 8 mm 75 kg/m³ angesehen. Eine zusätzliche Zugabe von Kunststofffasern verstärkt diese Probleme.

Hinsichtlich der Dimensionierung der Förderleitung ist ferner zu beachten, dass die Faserlänge nicht 50 - 60% des Förderleitungsdurchmessers überschreiten sollte (vgl. hierzu beispielsweise Tom Melbye, Ross Dimmock und Knut F. Garshol, "Sprayed Concrete for Rock Support", UGC International, Divison of BASF Construction Chemicals (Switzerland) Ltd., 11. Auflage, 2006, Abschnitt 5.6 "Mix design for steel fibre reinforced sprayed concrete", Seiten 127, 128).

Aus der GB 2 347 414 A ist ein Verfahren zum Aufspritzen eines Zementgemisches, insbesondere eines Zementgemisches für einen feuerfesten Belag, bekannt, bei dem ein Gemisch aus einem Zement, einem organischen Schaumbildner, Zuschlägen und Wasser bereitgestellt wird, diese Zementmischung aufgeschäumt und zu einer Spritzdüse gefördert wird, dort Pressluft und ein nichtbeschleunigendes Versteifungsmittel zugeführt werden, um dann für eine im Wesentlichen augenblickliche Versteifung des Zementgemisches auf dem Substrat zu sorgen. Die Zugabe des organischen Schaumbildners diene der Verringerung der Dilatanz (Scherverzähung) und gestatte eine Pumpbarkeit bei bis zu 25 - 30 Vol.-% Luft. Die erhöhte Pumpbarkeit und ein höheres Pressluftvolumen an der Spritzdüse erhöhen die Geschwindigkeit der aufgespritzten Zementmischung beim Auftreffen auf das Substrat, so dass der Schaum gebrochen und die sich ergebende Porosität der Zementmischung beim Aufprall auf das Substrat verringert wird. Das Versteifungsmittel sorgt dabei für ein Versteifen der Zementmischung durch Festhalten des Wassers, das beim Kollabieren der Poren beim Aufprall frei wird, so dass ein Rutschen der Mischung vermieden wird.

Aufgabe der Erfindung ist es, ein Verfahren zum Aufspritzen einer hoch faserhaltigen Baustoffmischung im Nassspritzverfahren zu schaffen, bei dem trotz hoher Fasergehalte eine gute Transportfähigkeit gewährleistet ist.

Diese Aufgabe wird erfindungsgemäß durch ein Verfahren mit den Merkmalen des Anspruchs 1 gelöst.

Bei dem erfindungsgemäßen Verfahren zum Aufspritzen einer hoch faserhaltigen Baustoffmischung mit einem Stahlfasergehalt von mehr als 50 kg/m³ und/oder mit einem Kunststofffasergehalt von mehr als 1 kg/m³ im Nassspritzverfahren wird zunächst zur Verbesserung der Transportfähigkeit einer hoch faserhaltigen Baustoffmischung ein Tensid zugemischt und Luft eingemischt. Dann wird die Baustoffmischung durch eine Förderleitung zu einer Spritzauftragsvorrichtung transportiert. Schließlich wird der Baustoffmischung beim Aufspritzen ein Entschäumer zugegeben.

Der Erfindung liegt einerseits die Erkenntnis zu Grunde, dass durch das Zumischen eines Tensids (auch Schaumbildner genannt) und das Einmischen von Luft (Schaumbildung) die Transportfähigkeit einer hoch faserhaltigen Baustoffmischung verbessert, insbesondere die Gefahr der Igelbildung verringert werden kann. Beispielsweise können auf diese Weise 10 - 15% Luft durch Schlagen oder mittels eines Schaumgenerators eingemischt werden. Durch diese Maßnahme wird bei hoch faserhaltigen Mischungen, die beispielsweise Stahlfasern in einer Menge von mehr als 100 kg/m³ bis hin zu 250 kg/m³ enthalten, die Transportfähigkeit verbessert und die Igelbildung vermieden. Die zweite der Erfindung zu Grunde liegende Idee besteht nun darin, die in der Mischung enthaltene Luft, welche sich nach dem Aufbringen auf den Untergrund störend auswirken würde, da der Beton keine Festigkeit erlangen würde, dadurch wieder aus der Mischung zu entfernen, dass vor Ort beim Aufspritzen ein Entschäumer zugegeben wird. Die erfindungsgemäße Kombination der Tensid-Zugabe beim Herstellen der Baustoffmischung und der Entschäumer-Zugabe beim Aufspritzen ermöglicht die Vorteile der besseren Transportierbarkeit ohne den Nachteil der negativen Beeinflussung der Betoneigenschaften.

Bei einer bevorzugten Ausführungsform des erfindungsgemäßen Verfahrens wird beim Aufspritzen außerdem ein Abbindebeschleuniger zugegeben. Dies erfolgt in bekannter Weise und mit dem Ziel, ein schnelles Erstarren der aufgebrachten Baustoffmischung auf dem Untergrund zu erreichen. Vorzugsweise werden der Abbindebeschleuniger und der Entschäumer mittels der Spritzauftragsvorrichtung beim Aufspritzen zugemischt. Insbesondere wird bevorzugt, dass der Abbindebeschleuniger und der Entschäumer mittels einer eine Spritzdüse der Spritzauftragsvorrichtung umgebenden Ringdüse zugegeben werden.

Bei einer Ausführungsform wird zunächst der Abbindebeschleuniger mit dem Entschäumer gemischt, wonach dann diese Abbindebeschleuniger-Entschäumer-Mischung beim Aufspritzen der Baustoffmischung zugegeben wird.

Die durch Zumischung des Tensids und durch Einmischung von Luft aufgeschäumte Baustoffmischung mit hohem Faseranteil kann sowohl im Dichtstrom zur Spritzauftragsvorrichtung gepumpt als auch mittels Druckluft im Dünnstrom zur Auftragsvorrichtung transportiert werden. Bei einer bevorzugten Ausführungsform wird die Baustoffmischung im Dichtstrom zu der Spritzauftragsvorrichtung transportiert. Dabei befindet sich vorzugsweise eine den Entschäumer und den Abbindebeschleuniger dem Baustoff-Luft-Strom zumischende Ringdüse stromab des Ortes, an dem der Druckluftstrom die im Dichtstrom herantransportierte Baustoffmischung mitreißt.

Eine bevorzugte Ausführungsform des erfindungsgemäßen Verfahrens ist dadurch gekennzeichnet, dass eine Zement und Gesteinskörnung von maximal 8 mm Durchmesser enthaltende Baustoffmischung mit einem Stahlfaseranteil von mehr als 100 kg/m³ aufgespritzt wird.

Bei einer weiteren bevorzugten Ausführungsform des erfindungsgemäßen Verfahrens wird eine Zement und Gesteinskörnungen von maximal 8 mm Durchmesser enthaltende Baustoffmischung mit einem Kunststofffasergehalt von mehr als 3 kg/m³ aufgespritzt.

Bei einer bevorzugten Weiterbildung des Verfahrens wird nach dem Zumischen des Tensids 10 - 15 Vol.-% Luft eingemischt.

Vorteilhafte und/oder bevorzugte Weiterbildungen der Erfindung sind in den Unteransprüchen gekennzeichnet.

Nachfolgend wird die Erfindung anhand einer bevorzugten Ausführungsform näher beschrieben.

Bei der bevorzugten Ausführungsform des erfindungsgemäßen Verfahrens zum Aufspritzen einer faserhaltigen Baustoffmischung im Nassspritzverfahren wird zunächst eine faserhaltige Baustoffmischung hergestellt. Eine bevorzugt hierbei verwendete Mischung enthält beispielsweise 300 - 500 kg/m³ Zement, 1400 - 1600 kg/m³ Gesteinskörnungen mit Durchmessern unter etwa 8 mm, 6 - 11 Gew.-% Silica und/oder kalzinierte Tone, bezogen auf die Zementmasse, und Fasern, nämlich über 100 kg/m³ bis zu 250 kg/m³ Stahlfasern und 1,5 - 3 kg/m³ PP-Fasern. Hierbei wird ein w/z-Wert von 0,3 bis 0,5 eingestellt. Vorzugsweise werden zunächst die Bindemittel, die Zuschläge und diverse hier nicht genannte Zusatzstoffe (Additive) mit Wasser gemischt und dann der Mischung die Fasern zugemischt.

Erfindungsgemäß wird der Baustoffmischung ein Tensid (auch Schaumbildner oder Luftporenbildner genannt) zugemischt. Hier kann beispielsweise der Luftporenbildner "Centrament Air 202" der MC-Bauchemie verwendet werden. Der Schaumbildner wird beispielsweise in einem Anteil von 5 - 10 Gew.-%, bezogen auf die Zementmasse, zugegeben. Der mit dem Tensid versehenen Baustoffmischung wird anschließend Luft, beispielsweise an einem Anteil von 10 - 15 Vol.-% zugemischt. Dies kann durch Schlagen oder auch mit Hilfe eines Schaumgenerators ausgeführt werden.

Die so hergestellte geschäumte Baustoffmischung mit hohem Faseranteil wird nunmehr über eine Förderleitung, insbesondere einem Schlauch, mit einem Innendurchmesser, der etwa dem Doppelten der Faserlänge entspricht, zu der Spritzauftragsvorrichtung transportiert. Dies wird vorzugsweise durch Pumpen in Dichtstromförderung ausgeführt. Die Spritzauftragsvorrichtung umfasst eine Spritzdüse, der die geschäumte Baustoffmischung zugeführt wird, wobei die Baustoffmischung mit Hilfe von Druckluft (Treibluft) fortgerissen und auf die Auftragfläche geschleudert wird. Stromab des Ortes, an dem der Druckluftstrom die im Dichtstrom herantransportierte Baustoffmischung mitreißt befindet sich eine Düse, beispielsweise eine Ringdüse, die dem Treibluft-Baustoff-Gemisch eine Mischung aus Abbindebeschleuniger und Entschäumer zusetzt. Ein Abbindebeschleuniger wird in einem Umfang zugegeben, der ein Auftragen in der erforderlichen Schichtdicke, auch über Kopf, ermöglicht. Je nach gewähltem Abbindebeschleuniger und dem verwendeten Zement der Baustoffmischung wird der Abbindebeschleuniger in einem Anteil von etwa 2 - 8 Gew.-%, bezogen auf die Zementmasse, zugegeben. Die Zugabemenge des Abbindebeschleunigers wird in der Regel automatisch über eine Dosierpumpe in Verbindung mit der Betonpumpe in Abhängigkeit vom Zementgehalt der Mischung und der eingestellten Förderleistung geregelt.

Der Entschäumer wird beispielsweise in einem Mengenverhältnis von 1:1 dem Abbindebeschleuniger vorab beigemischt, so dass die Abbindebeschleuniger-Entschäumer-Mischung an der Spritzdüse zugegeben wird.

Das erfindungsgemäße Verfahren wird vorzugsweise für die Instandsetzung und Ertüchtigung von Tunnelwänden eingesetzt. Die Zugabe von Stahlfasern in einem hohen Anteil verbessert die mechanischen Eigenschaften des Spritzbetons, während die Zugabe der Kunststofffasern die Brandbeständigkeit erhöht.

## Patentansprüche

1. Verfahren zum Aufspritzen einer hoch faserhaltigen Baustoffmischung mit einem Stahlfasergehalt von mehr als 50 kg/m³ und/oder mit einem Kunststofffasergehalt von mehr als 1 kg/m³ im Nassspritzverfahren, wobei:
a) zur Verbesserung der Transportfähigkeit einer hoch faserhaltigen Baustoffmischung ein Tensid zugemischt und Luft eingemischt wird,
b) die Baustoffmischung durch eine Förderleitung zu einer Spritzauftragsvorrichtung transportiert wird und
c) der Baustoffmischung beim Aufspritzen ein Entschäumer zugegeben wird.

2. Verfahren nach Anspruch 1, **dadurch gekennzeichnet, dass** der Baustoffmischung beim Aufspritzen ein Abbindebeschleuniger zugegeben wird.

3. Verfahren nach Anspruch 2, **dadurch gekennzeichnet, dass** im Schritt c) der Abbindebeschleuniger und der Entschäumer mittels der Spritzauftragsvorrichtung zugemischt werden.

4. Verfahren nach Anspruch 3, **dadurch gekennzeichnet, dass** der Abbindebeschleuniger und der Entschäumer mittels einer eine Spritzdüse der Spritzauftragsvorrichtung umgebenden Ringdüse zugegeben werden.

5. Verfahren nach einem der Ansprüche 2 - 4, **dadurch gekennzeichnet, dass** zunächst der Abbindebeschleuniger mit dem Entschäumer gemischt wird und dann diese Abbindebeschleuniger-Entschäumer-Mischung im Schritt c) der Baustoffmischung zugegeben wird.

6. Verfahren nach einem der Ansprüche 1 - 5, **dadurch gekennzeichnet, dass** die Baustoffmischung im Dichtstrom zu der Spritzauftragsvorrichtung transportiert wird.

7. Verfahren nach einem der Ansprüche 1 - 6, **dadurch gekennzeichnet, dass** eine Zement und Gesteinskörnungen von maximal 8 mm Durchmesser enthaltende Baustoffmischung mit einem Stahlfasergehalt von mehr als 100 kg/m³ aufgespritzt wird.

8. Verfahren nach einem der Ansprüche 1 - 7, **dadurch gekennzeichnet, dass** eine Zement und Gesteinskörnungen von maximal 8 mm Durchmesser enthaltende Baustoffmischung mit einem Kunststofffasergehalt von mehr als 3 kg/m³ aufgespritzt wird.

9. Verfahren nach einem der Ansprüche 1 - 8, **dadurch gekennzeichnet, dass** im Schritt a) 10 - 15 % Luft eingemischt werden.

## Claims

1. A process for spraying a highly fibrous building material mixture with a steel fibre content of more than 50 kg/m³ and/or with a plastic fibre content of more than 1 kg/m³ in a wet spraying process, wherein:
a) in order to improve the transportability of a highly fibrous building material mixture, a surfactant is added and air is admixed,
b) the building material mixture is transported through a conveyor line to a spray application device, and
c) during spraying, a defoaming agent is added to the building material mixture.

2. The process as claimed in claim 1, **characterized in that** during spraying, a setting accelerator is added to the building material mixture.

3. The process as claimed in claim 2, **characterized in that** in step c), the setting accelerator and the defoaming agent are mixed by means of the spray application device.

4. The process as claimed in claim 3, **characterized in that** the setting accelerator and the defoaming agent are added by means of a ring nozzle which surrounds a spray nozzle of the spray application device.

5. The process as claimed in one of claims 2 to 4, **characterized in that** firstly, the setting accelerator is mixed with the defoaming agent, and then this setting accelerator-defoaming agent mixture is added to the building material mixture in step c).

6. The process as claimed in one of claims 1 to 5, **characterized in that** the building material mixture is transported to the spray application device as a dense stream.

7. The process as claimed in one of claims 1 to 6, **characterized in that** a building material mixture containing a cement and aggregates with a maximum diameter of 8 mm and having a steel fibre content of more than 100 kg/m³ is sprayed.

8. The process as claimed in one of claims 1 to 7, **characterized in that** a building material mixture containing a cement and aggregates with a maximum diameter of 8 mm and having a plastic fibre content of more than 3 kg/m³ is sprayed.

9. The process as claimed in one of claims 1 to 8, **characterized in that** in step a), 10 to 15 % of air is admixed.

## Revendications

1. Procédé destiné à projeter un mélange de matériaux de construction à haute teneur en fibres présentant une teneur en fibres d'acier supérieure à 50 kg/m³ et/ou présentant une teneur en fibres de matière plastique supérieure à 1 kg/ m^{3,} par procédé de projection par voie humide :
a) un tensio-actif étant ajouté et de l'air étant incorporé pour améliorer l'aptitude au transport d'un mélange de matériaux de construction à haute teneur en fibres,
b) le mélange de matériaux de construction étant transporté via un conduit de convoyage vers un dispositif d'application par projection et
c) lors de la projection, un agent anti-mousse étant rajouté au mélange de matériaux de construction.

2. Procédé selon la revendication 1, **caractérisé en ce que** lors de la projection, on rajoute un accélérateur de prise au mélange de matériaux de construction.

3. Procédé selon la revendication 2, **caractérisé en ce que** dans l'étape c), on incorpore l'accélérateur de prise et l'agent anti-mousse au moyen du dispositif d'application par projection.

4. Procédé selon la revendication 3, **caractérisé en ce qu'**on ajoute l'accélérateur de prise et l'agent anti-mousse au moyen d'une buse annulaire entourant le dispositif d'application par projection.

5. Procédé selon l'une quelconque des revendications 2 à 4, **caractérisé en ce qu'**on mélange d'abord l'accélérateur de prise avec l'agent anti-mousse et ensuite on ajoute dans l'étape c) ledit mélange accélérateur de prise-agent anti-mousse au mélange de matériaux de construction.

6. Procédé selon l'une quelconque des revendications 1 à 5, **caractérisé en ce que** le mélange de matériaux de construction est transporté en flux dense vers me dispositif d'application par projection.

7. Procédé selon l'une quelconque des revendications 1 à 6, **caractérisé en ce qu'**on projette un mélange de matériaux de construction contenant un ciment et des granulats d'un diamètre maximum de 8 mm présentant une teneur en fibres d'acier supérieure à 100 kg/m³.

8. Procédé selon l'une quelconque des revendications 1 à 7, **caractérisé en ce qu'**on projette un mélange de matériaux de construction contenant un ciment et des granulats d'un diamètre maximum de 8 mm présentant une teneur en fibres de matière plastique supérieure à 3 kg/m³.

9. Procédé selon l'une quelconque des revendications 1 à 8, **caractérisé en ce que** dans l'étape a) on incorpore de 10 à 15 % d'air.
